# EUROPEAN PATENT APPLICATION

(11) **EP 4 461 778 A1**
(43) Date of publication of application: **13.11.2024**
(21) Application number: 22918438.7
(22) Date of filing: 26.12.2022
(51) Int. Cl.: C09D 165/00, C08L 65/00

(54) **PREPARATION METHOD FOR TRANSPARENT CONDUCTIVE POLYMER FILM, AND CONDUCTIVE POLYMER FILM PREPARED THEREBY**

(30) Priority: 06.01.2022 CN 202210010405
(71) Applicant: Oxford University (Suzhou) Science and Technology CO. LTD, Suzhou, Jiangsu 215123 (CN)
(72) Inventor: KEVAL K, Sonigara, SuzhouIndustrial Park Jiangsu 215123 (CN); HUANG, Jingsong, Suzhou Industrial Park Jiangsu 215123 (CN); PAUL, Stavrinou, Suzhou Industrial Park Jiangsu 215123 (CN); DONALD C, Bradley, Suzhou Industrial Park Jiangsu 215123 (CN); HU, Yun, Suzhou, Jiangsu 215123 (CN); WANG, Dewan, Suzhou, Jiangsu 215123 (CN)
(74) Representative: Torggler & Hofmann Patentanwälte - Innsbruck
(86) International application number: PCT/CN2022/142000
(87) International publication number: WO 2023/130995

(57) **Abstract**

The present disclosure discloses a preparation method for a transparent conductive polymer film, wherein the method comprises the following steps: (a) providing a precursor solution, wherein the precursor solution comprises a main solvent, an auxiliary solvent, an oxidizing agent and a thiophene monomer, wherein the auxiliary solvent comprises one or more of water, an aqueous solution containing hydrogen ions, a cyclic amide, a cyclic urea, a chain alkyl urea, phosphate or phosphoramide, and (b) coating the surface of a substrate with the precursor solution, so that the thiophene monomer is subjected to a polymerization reaction to form a conductive polymer film. The preparation method according to the present disclosure is economical, effective and simple, and the fabrication of high-quality transparent conductive polymer films by a one-step solution method has promising applications.

## Description

### Cross-reference to Related Applications

This application claims the priority to PCT/CN2022/142000, entitled "preparation method for transparent conductive polymer film, and conductive polymer film prepared thereby" and filed on December 26, 2022, the entirety of which is incorporated herein by reference.

### Field of the Invention

The present disclosure relates to a preparation method for a transparent conductive polymer film.

### Background of the Invention

Transparent conductive films (TCFs) are important in the manufacture of optoelectronic devices, sensors, as well as touchscreens and sensor devices. Nanowires, carbon materials and films based on conjugated polymers are widely used commercially. Wherein, conductive polymer films, in particular counterion-doped poly(3-4-ethylenedioxythiophene) (PEDOT) films, are of particular interest due to their low cost, high conductivity and excellent transparency, which makes them particularly suitable for use as a charge transport layer in solution coating technology. However, most of preparation methods for such pure PEDOT conductive films are complex, the preparation cost is high, and the films quality varies, limiting the wide-scale commercial promotion.

There is a lack of low cost, high quality film polymerization methods with simple steps for industrial implementation in existing PEDOT technologies. Initially, the technicians developed a solution coating method, in which PEDOT is polymerized in a solvent in the presence of an oxidizing agent (e.g. FeCl₃) and was able to obtain conductivities in excess of 1000 S/cm. However, the transparency and morphology of the film produced by this method is not good. It was shown that despite the fact that the PEDOT polymer was doped by the counter-anion of the oxidant during the reaction process, the conjugated carbon-positive pairs of the polymer chains ultimately obtained were able to exhibit good electrical conductivity and transparency. However, when using the solution coating method, excessively fast reaction rates and crystallization of the oxidant resulted in short-chain and non-doped forms of PEDOT. Further polystyrene sulfonates (PSS), p-toluene sulfonates (OTs) and trifluoromethanesulfonates (OTf) have been introduced to solve the above problems instead of chloride-based inorganic ions. However, post-treatment of the film is often required to increase its conductivity and transmittance, and the large molecular size of the organic counterions leads to an increase in the amorphous regions of the film, limiting the increase in conductivity.

PEDOT two-step vapor phase polymerization (VPP) and chemical vapor deposition (CVD) methods have been proposed in recent years, resulting in films with excellent electrical conductivity and high transparency for potential commercial needs. These methods first deposit the oxidant as a film and then expose it to EDOT vapor under vacuum, or it can be evaporated with EDOT to obtain a film, or further introduce Lewis base additives (e.g., pyridine, imidazole, N-methyl pyrrolidone (NMP) and integrate them with various non-reactive polymer additives from polyethylene glycol copolymers to produce sufficient doping to improve the conductivity. However, the high cost based on an oxidising agent for organic anions, vacuum vapor deposition equipment and evaporation units that require precise control limit the production of the method on a commercial scale.

### Summary of the Invention

In response to the problems in the prior art, the present disclosure provides a preparation method for a transparent conductive polymer film. The preparation method is cost-effective and simple to manufacture a high-quality conductive polymer film, in particular a PEDOT-based conductive polymer film, by a one-step solution method. Further, the present disclosure provides a conductive polymer film, in particular a PEDOT-based conductive polymer film, obtained by the preparation method.

The preparation method for a transparent conductive polymer film provided by the present disclosure comprises the following steps:
(a) providing a precursor solution, wherein the precursor solution comprises a main solvent, an auxiliary solvent, an oxidizing agent and a thiophene monomer, wherein the auxiliary solvent comprises one or more of water, an aqueous solution containing hydrogen ions, a cyclic amide, a cyclic urea, a chain alkyl urea, phosphate or phosphoramide, and
(b) coating the surface of a substrate (e.g. glass substrates) with the precursor solution, so that the thiophene monomer is subjected to a polymerization reaction to form a conductive polymer film.

According to some embodiments of the present disclosure, the thiophene monomer comprises 3,4-ethylenedioxythiophene (EDOT). The structure of EDOT is shown below:

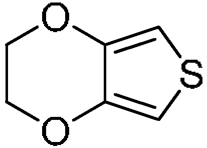

According to some embodiments of the present disclosure, the polymerization reaction temperature in step (b) is selectable according to the actual ratio of the main and auxiliary solvents as well as the oxidizing agent, preferably 20°C-80°C, further preferably 50-70°C. According to some embodiments of the present disclosure, the polymerization reaction time in step (b) is 0.1-20 minutes, preferably 5-10 minutes.

According to some embodiments of the present disclosure, the method does not require any additional post-processing step, the post-processing step comprising an acid treatment and/or a high temperature treatment of greater than 100°C.

According to some embodiments of the present disclosure, the aqueous solution containing hydrogen ions is selected from organic acid solution and/or inorganic acid solution.

According to some embodiments of the present disclosure, the aqueous solution containing hydrogen ions is selected from at least one of hydrochloric acid solution, phosphoric acid solution, sulfuric acid solution, perchloric acid solution or acetic acid solution. The concentration of hydrogen ions in the aqueous solution of hydrogen ions is preferably greater than 0.01 mol/L.

According to some embodiments of the present disclosure, the preparation method further comprises washing and drying the conductive polymer film obtained in step (b). It should be noted that post-treatment as understood by those skilled in the art will change the physical or chemical properties of the film, such as acid treatment, high temperature treatment, or combinations thereof.

According to some embodiments of the present disclosure, the precursor solution further comprises a polyethylene glycol copolymer. In some preferred embodiments, the polyethylene glycol copolymer comprises a triblock copolymer of polyethylene glycol-polypropylene glycol-polyethylene glycol.

According to some embodiments of the present disclosure, the oxidizing agent comprises Fe(ClO₄)₃, Fe(OTf)₃ or Fe(OTs)₃.

According to some embodiments of the present disclosure, the main solvent comprises one or more of C1-C6 alcohols, acetonitrile or dimethyl nylon acid (NME).

The auxiliary solvent in the present disclosure modulates the precursor solution by providing a suitable solvent environment, which results in a slow reaction rate and contributes to the formation of a thicker film (about 20-1500 nm) and a homogeneous polymerization, which results in the formation of a better film. The person skilled in the art can select the mass concentration of the auxiliary solvent according to the actual need. Furthermore, the inventor of the present disclosure has found that the concentration of the auxiliary solvent preferably does not exceed 50%. In some embodiments, the precursor solution contains no more than 50%, no more than 20%, no more than 15% or no more than 18% by mass of the auxiliary solvent. In some embodiments, the precursor solution contains 1-25% by mass of the auxiliary solvent. In some embodiments, the precursor solution contains 5-25%, 5-20%, 5-15% or 5-12% by mass of the auxiliary solvent.

According to some embodiments of the present disclosure, the auxiliary solvent comprises one or more of a compound of formula (A), a compound of formula (B), a compound of formula (C), a compound of formula (D), a compound of formula (E), a compound of formula (F), water, an aqueous solution containing hydrogen ions, 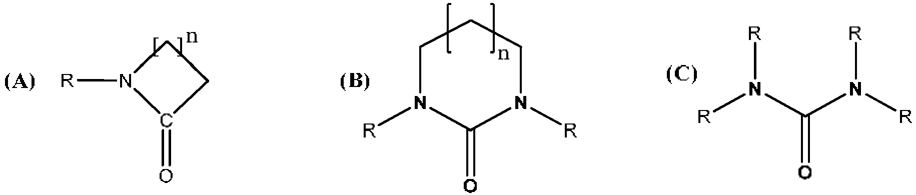 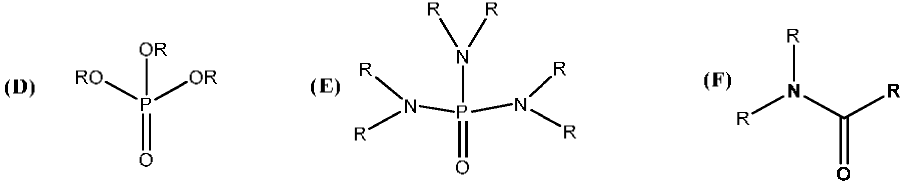 in formula (A), n is an integer from 1 to 8, and R is independently selected from C1-C8 alkyl, preferably C1-C6 alkyl, such as methyl, ethyl, propyl, butyl, pentyl or hexyl; in formula (B), n is an integer from 0 to 8, and R is independently selected from C1-C8 alkyl, preferably C1-C6 alkyl, such as methyl, ethyl, propyl, butyl, pentyl or hexyl; in formula (C), R is independently selected from C1-C8 alkyl, preferably C1-C6 alkyl, such as methyl, ethyl, propyl, butyl, pentyl or hexyl; in formula (D), R is independently selected from C1-C8 alkyl, preferably C1-C6 alkyl, such as methyl, ethyl, propyl, butyl, pentyl or hexyl; in formula (E), R is independently selected from C1-C8 alkyl, preferably C1-C6 alkyl, such as methyl, ethyl, propyl, butyl, pentyl or hexyl; in formula (F), R is independently selected from C1-C8 alkyl, preferably C1-C6 alkyl, such as methyl, ethyl, propyl, butyl, pentyl or hexyl.

According to some embodiments of the present disclosure, in a compound of formula (A), n is 1, 2, 3, 4 or 5. According to some embodiments of the present disclosure, in a compound of formula (A), R is methyl, ethyl, or propyl.

According to some embodiments of the present disclosure, in a compound of formula (B), n is 0, 1, 2 or 3. According to some embodiments of the present disclosure, in a compound of formula (B), R is methyl, ethyl, or propyl.

According to some embodiments of the present disclosure, in a compound of formula (C), R is methyl, ethyl, propyl, butyl, pentyl or hexyl.

According to some embodiments of the present disclosure, in a compound of formula (D), R is methyl, ethyl, propyl, butyl, pentyl or hexyl.

According to some embodiments of the present disclosure, in a compound of formula (E), R is methyl, ethyl, propyl, butyl, pentyl or hexyl.

According to some embodiments of the present disclosure, in a compound of formula (F), each R is independently methyl, ethyl, propyl, butyl, pentyl or hexyl.

According to some embodiments of the present disclosure, the auxiliary solvent comprises at least one of tetramethylurea (TMU), trimethyl phosphate (TMP), tributyl phosphate (TBP), N, N-dimethyl propenylurea (DMPU), N-methylcaprolactam (CLM), hexamethylphosphorotriamine (HMPA), or N, N-diethylacetamide (DEAC).

According to some embodiments of the present disclosure, in the precursor solution, the content of the auxiliary solvent does not exceed 50% by mass, preferably 5-50%, further preferably 5-20%.

According to some embodiments of the present disclosure, the content of the aqueous solution containing hydrogen ions in the auxiliary solvent is 0.1%-20% by mass, preferably 1%-10%.

Further, the present disclosure provides a transparent conductive polymer film which is obtained by the preparation method mentioned above. Preferably, a sheet resistance of the conductive polymer film is 50-500 Ohm/sq, preferably not greater than 200 Ohm/sq, and a light transmittance is not less than 70%, preferably 70-90%.

According to some embodiments of the present disclosure, the conductive polymer film comprises PEDOT.

The conductive polymer film according to the present disclosure is applied in a membrane touch screen, an electronic writing pad, an electrochromic display, a smart window, a solar cell, a light emitting diode, a laser device, a gas sensor, an antistatic coating or a transparent conductive electrode in a capacitive electrode. Films prepared by the method can also be applied in a gas sensor, an antistatic coating and a capacitive electrode.

The preparation method according to the present disclosure is a one-step method based on solution that is low-temperature and low-cost, allowing the production of PEDOT-based TCFs in a common environment. In addition, the process technology can be easily extended in different solvents.

The film obtained by the preparation method according to the present disclosure have good uniformity and variable thickness. The film obtained by the method has a transmittance in the visible spectral range of not less than 70%, preferably 70-90%, and a sheet resistance of 50-500 Ohm/sq, preferably not greater than 200 Ohm/sq. The ability to produce high quality and easily scalable PEDOT-based TCFs makes them an economical alternative to silver and tin oxide based TCFs.

Another technical advantage of the preparation method according to the present disclosure is that it allows very precise and simple doping of highly reactive and strong counterions such as perchlorate (Fe(ClO₄)₃).Normally, it is difficult to dope these types of counterions, and in existing processes, it can only be achieved by using expensive organic counterions (e.g. polystyrene sulfonate (PSS), p-toluene sulfonate (OTs) and trifluoromethanesulfonic salt (OTf)), which are subsequently fully doped by vacuum-assisted polymerization method, and then post-treated so that they are replaced by inorganic counterions.

A further technical advantage of the preparation method according to the present disclosure is that the reaction rate can be controlled by adding an auxiliary solvent (e.g., cyclic N, N-dimethylalkynylurea and β-caprolactam) in the main solvent. At the same time, the viscosity property of the auxiliary solvent, compatible with a wide range of solvents, enables the method to form highly transparent films of variable thickness and is suitable for printing preparation, further reducing the preparation cost.

### Brief Description of the Drawings

Fig. 1 shows the chemical formation mechanism of PEDOT:ClO₄ polymer formation;
Fig. 2 shows an optical microscope image of a polymer film on a glass substrate in reflection (top) and transmission modes (bottom) in Example 1, with a scale bar of 100 µm x 150 µm (20x zoom);
Fig. 3 shows a transmittance and absorption of the polymer film of Example 1 in the ultraviolet-visible-near infrared;
Fig. 4 shows a digital image of a large area film with different thicknesses (left) from Example 1, and a thin sheet resistance demonstration of about 72.5 ohm/sq for 10x10 cm² film;
Fig. 5 shows the ultraviolet-visible-near infrared transmittance of the polymer film prepared in Example 2;
Fig. 6 shows the ultraviolet-visible-near infrared transmittance of the polymer film prepared in Example 3;
Fig. 7 shows the ultraviolet-visible-near infrared transmittance of the polymer film prepared in Example 4.

### Detailed Description of the Embodiments

For the sake of brevity, the present disclosure specifically discloses only some numerical ranges. However, any lower limit can be combined with any upper limit to form an unspecified range, and any lower limit may be combined with other lower limit to form an unspecified range. And likewise, any upper limit may be combined with any other upper limit to form an unspecified range. In addition, each individually disclosed point or individual value may itself be used as a lower limit or upper limit in combination with any other point or individual value or in combination with other lower or upper limits to form an unspecified range.

In the description of the present disclosure, unless otherwise indicated, the terms "above" and "below" include the number.

Unless otherwise indicated, terms used in the present disclosure have the well-known meanings commonly understood by those skilled in the field. Unless otherwise indicated, the values of the various parameters referred to in the present disclosure may be measured by various measurement methods commonly used in the field (e.g., they may be tested in accordance with the methods given in the embodiments of the present disclosure).

A list of items linked by the terms "at least one of", "at least one kind of" or other similar terms may imply any combination of the listed items. For example, if items A and B are listed, the phrase "at least one of A and B" implies A only; B only; or A and B. In another embodiment, if items A, B and C are listed, then the phrase "at least one of A, B and C" means A only; or B only; C only; A and B (excluding C); A and C (excluding B); B and C (excluding A); or all of A, B and C. Item A may contain a single component or multiple components. Item B may contain a single component or multiple components. Item C may contain a single component or multiple components.

The present disclosure is further illustrated below in connection with specific embodiments. It should be understood that these specific embodiments are used only to illustrate the present disclosure and are not intended to limit the scope of the present disclosure.

The present disclosure describes a preparation method for a transparent conductive polymer film by a one-step solution processing method for the direct formation of the final film by polymerization of thiophene-like monomers in the presence of an oxidizing agent, a copolymer and an auxiliary solvent. The following numbered aspects describe various embodiments of the present disclosure:
Embodiment 1. A preparation method for a transparent conductive polymer film, wherein the method comprises the following steps: (a) providing a precursor solution, wherein the precursor solution comprises a main solvent, an auxiliary solvent, an oxidizing agent and a thiophene monomer, wherein the auxiliary solvent comprises one or more of water, an aqueous solution containing hydrogen ions, a cyclic amide, a cyclic urea, a chain alkyl urea, phosphate or phosphoramide, and (b) coating the surface of a substrate with the precursor solution, so that the thiophene monomer is subjected to a polymerization reaction to form a conductive polymer film.
Embodiment 2. The preparation method according to Embodiment 1, wherein: the thiophene monomer comprises 3,4-ethylenedioxythiophene.
Embodiment 3. The preparation method according to Embodiment 1 or 2, wherein: the method does not require any additional post-processing step, the post-processing step comprising an acid treatment, a high temperature treatment, or a combination thereof.
Embodiment 4. The preparation method according to any of Embodiments 1-3, wherein: the precursor solution further comprises a polyethylene glycol copolymer, preferably the polyethylene glycol copolymer comprises a triblock copolymer of polyethylene glycol-polypropylene glycol-polyethylene glycol
Embodiment 5. The preparation method according to any of Embodiments 1-4, wherein: the oxidizing agent comprises Fe(ClO₄)₃, Fe(OTf)₃ or Fe(OTs)₃, preferably the oxidizing agent comprises Fe(ClO₄)₃.
Embodiment 6. The preparation method according to any of Embodiments 1-5, wherein: the main solvent comprises one or more of C1-C6 alcohols (e.g., methanol, ethanol, ethylene glycol, glycerol, etc.), acetonitrile, or dimethyl nylon acid (NME).
Embodiment 7. The preparation method according to any of Embodiments 1-6, wherein: the auxiliary solvent comprises one or more of a compound of formula (A), a compound of formula (B), a compound of formula (C), a compound of formula (D), a compound of formula (E), a compound of formula (F), water, an aqueous solution containing hydrogen ions, 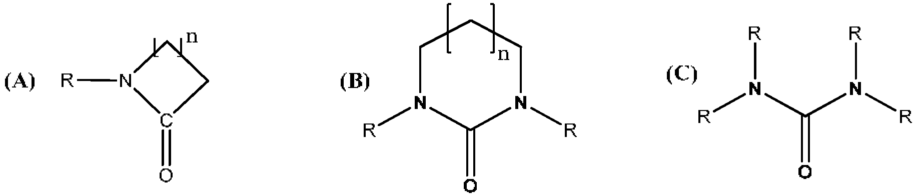 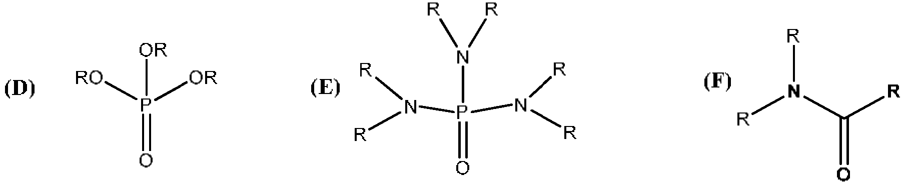
   in formula (A), n is an integer from 1 to 8, and R is independently selected from C1-C8 alkyl, preferably C1-C6 alkyl, such as methyl, ethyl, propyl, butyl, pentyl or hexyl;
   in formula (B), n is an integer from 0 to 8, and R is independently selected from C1-C8 alkyl, preferably C1-C6 alkyl, such as methyl, ethyl, propyl, butyl, pentyl or hexyl;
   in formula (C), R is independently selected from C1-C8 alkyl, preferably C1-C6 alkyl, such as methyl, ethyl, propyl, butyl, pentyl or hexyl;
   in formula (D), R is independently selected from C1-C8 alkyl, preferably C1-C6 alkyl, such as methyl, ethyl, propyl, butyl, pentyl or hexyl;
   in formula (E), R is independently selected from C1-C8 alkyl, preferably C1-C6 alkyl, such as methyl, ethyl, propyl, butyl, pentyl or hexyl;
   in formula (F), R is independently selected from C1-C8 alkyl, preferably C1-C6 alkyl, such as methyl, ethyl, propyl, butyl, pentyl or hexyl.
Embodiment 8. The preparation method according to any of Embodiments 1-7, wherein: the auxiliary solvent comprises at least one of tetramethylurea (TMU), trimethyl phosphate (TMP), tributyl phosphate (TBP), N, N-dimethyl propenylurea (DMPU), N-methylcaprolactam (CLM), hexamethylphosphorotriamine (HMPA), or N, N-diethylacetamide (DEAC).
Embodiment 9. The preparation method according to any of Embodiments 1-8, wherein: in the precursor solution, the content of the auxiliary solvent does not exceed 50% by mass, preferably 5-50%, preferably no more than 25% by mass, further preferably 5-25% by mass, for example 5-15% by mass.
Embodiment 10. A conductive polymer film, obtained by the preparation method according to any of Embodiments 1-9, wherein, preferably a sheet resistance of the conductive polymer film is not greater than 200 ohm/sq and a transmittance is not less than 70%.
Embodiment 11. The conductive polymer film according to Example 10 is applied in a membrane touch screen, an electronic writing pad, an electrochromic display, a smart window, a solar cell, a light emitting diode, a laser device, a gas sensor, an antistatic coating or a capacitive electrode.

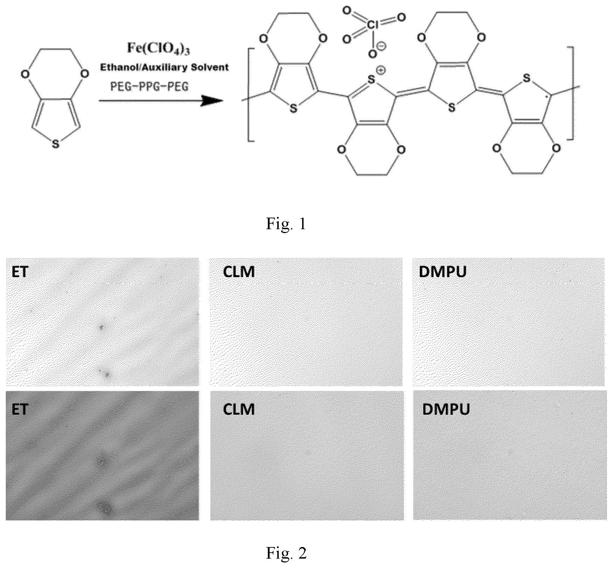

Fig. 1 shows a chemical reaction occurring in a film according to an embodiment of the present disclosure.

According to the present disclosure, the first material solution can be prepared by mixing a main solvent and an auxiliary solvent and a polyethylene glycol copolymer (e.g. PEG-PPG-PEG). An oxidizing agent such as iron perchlorate (III) and a thiophene-based monomer (preferably EDOT monomer) is added to the first material solution to obtain a precursor solution. The substrate is coated with the precursor solution, in particular a glass substrate, for example by any method such as spin-coating, dip-coating, slit-die-head coating or ink-jet printing. And the precursor solution reacts to form a film in a heated (e.g. 50-80°C, preferably 50-70°C) or vacuum or dry gas environment for a suitable time, preferably 0.1 to 20 minutes, preferably 0.15 to 10 minutes. Preferably, the film is washed to remove undesired components, e.g. by immersion in a solvent bath with ethanol/methanol solvent to wash unreacted oxidants, inert copolymers and auxiliary solvent components. The washed film is subsequently dried, for example at 50-80°C, preferably 50-70°C, so as to obtain a conductive polymer film that can be used with a resistance in the range of 50-500 ohm/sq, preferably obtaining a resistance of less than 200ohm/sq, and a transparency of greater than 70%, preferably a transparency in the range of 70-90%.

Past experiments have shown that the oxidizing agent in the oxidative polymerization reaction in the presence of Fe(III) is very reactive in polar solvents. And in order to solve this problem, auxiliary solvents (as shown in Table 1) such as N, N-dimethylpropyleneurea (DMPU) and N-methyl-caprolactam (CLM) were introduced. As a result, we obtain excellent conductive polymer films. In addition, these auxiliary solvents modulate the viscosity of the ethanol-based precursor solution and form thicker films (about 20-1500 nm) and homogeneous polymerization reactions, resulting in low sheet resistance (<200 ohm/sq) and high transparency (>70%). Controlled experiments have shown that the use of ethanol solutions without auxiliary solvents leads to poorer membrane performance. Whereas, existing techniques control this reaction through the use of additives use strong inhibitors (e.g., pyridine, imidazole, DMSO, and DMF), their content limits the thickness of the membrane and therefore results in low conductivity. In contrast, the DMPU and the auxiliary solvent of CLM used in the present disclosure produce good film properties.

The technical solutions of the present disclosure are exemplarily described below by means of embodiments.

### Example

The equipment used in the embodiment and comparative embodiments and the methods of calculating the parameters are as follows:
Equipment and method: Coating: prepared in a clean room using a spin-coater. The glass has an average transmittance of 90% in the visible range.
Ultraviolet-visible: Detection is carried out with a Shimadzu 2400 direct detector without integrating sphere, which has a slit width of 5 nm.
Thickness: Check with a Dektec profilometer, scrape three times and then average to take into account the thickness and calculate the average deviation.
Sheet Resistance: Use four probe devices, measure and average five spots on the film.
Conductivity: Average two samples and calculate standard deviation.

See Table 1 for the names and structures of representative auxiliary solvents used in the present disclosure.

**Table 1. Representative auxiliary solvents used in the present disclosure**

| Auxiliary Solvent | Full Name | Chemical Formula | Family |
|---|---|---|---|
| CLM | N-methylcaprolactam | 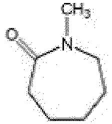 | Acidamide |
| DEAC | N, N'-diethylacetamide | 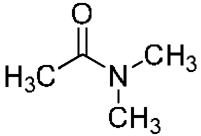 | Acidamide |
| DMPU | N,N'-Dimethylpropenylurea | 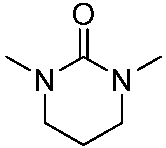 | Amide/ Acylurea |
| TMU | Tetramethylurea | 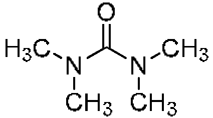 | Amide/ Acylurea |
| HMPA | Hexamethylphosphorotriamine | 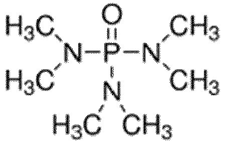 | Phosphoramidon |
| TMP | Trimethyl phosphate | 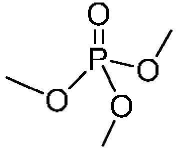 | Phosphate |
| TBP | Tributyl phosphate | 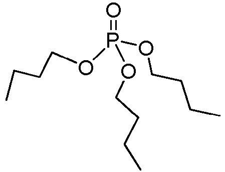 | Phosphate |

### [Example 1]

### Example 1-1

The one-step process for the preparation of conductive polymer film is as follows:
The main solvent ethanol and the auxiliary solvent DMPU were mixed proportionally to form a solvent mixture. A suitable block copolymer poly(ethylene glycol)-block-poly(propylene glycol)-block-poly(ethylene glycol) (P123, Mw of 5800) was added to the above solvent mixture and mixed thoroughly to form Solution A. Solution A contains 72 wt% ethanol, 8 wt% DMPU and 20 wt% P123. Then, the solid oxidizing agent Fe(ClO₄)₃ was added to Solution A to form Solution B. The concentration of Fe(ClO₄)₃ in Solution B was 100 mg/mL. Next, 10 µL of EDOT was added to 1 mL of Solution B to form Solution C. A film was spin-coated on the 15 mm² glass with Solution C within 5 minutes and annealed at 60°C for 10 minutes after the film formation. The film was then washed in an ethanol bath for 10 minutes (three times) at room temperature. The film was then dried at 60°C for 30 minutes to produce a conductive polymer film with the properties shown in Table 2.

For Examples 1-2 to 1-14, we substituted different auxiliary solvents under the same test conditions as in Example 1-1 and at different film thicknesses (see Table 2).

**Table 2. One-step film formation properties using Fe(ClO₄)₃ with auxiliary solvent**

| Examp le No. | Auxilia ry Solvent | Thickness es (nm) | Sheet Resistan ce (Ohm/sq ) | Transmittanc e % ( at 400 nm) | Transmittanc e % ( at 650 nm) | Uniformi ty |
|---|---|---|---|---|---|---|
| 1-1 | DMPU | 108(±5) | 88(±2) | - | - | uniform |
| 1-2 | DMPU | 71(±2) | 155(±3) | 79.83 | 58.08 | uniform |
| 1-3 | CLM | 109(±5) | 58(±2) | - | - | uniform |
| 1-4 | CLM | 52(±3) | 126(±11 ) | 84.28 | 66.57 | uniform |
| 1-5 | TMU | 122(±4) | 61(±1) | - | - | uniform |
| 1-6 | TMU | 65(±6) | 101(±3) | 81.45 | 63.74 | uniform |
| 1-7 | HMPA | 202(±18) | 109(±3) | - | - | uniform |
| 1-8 | HMPA | 107 (±9) | 172 (±2) | 80.84 | 69.81 | uniform |
| 1-9 | TMP | 110(±12) | 140 (±1) | - | - | uniform |
| 1-10 | TMP | 89 (±2) | 213 (±3) | 80.24 | 62.12 | uniform |
| 1-11 | TBP | 120 (±2) | 112(±1) | - | - | uniform |
| 1-12 | TBP | 95 (±2) | 166(±3) | 73.76 | 50.79 | uniform |
| 1-13 | DEAC | 147(±3) | 81.5 (±1) | - | - | uniform |
| 1-14 | DEAC | 88((±5) | 125.1(± 3) | 78.78 | 55.71 | uniform |

| | | | | | | |
|---|---|---|---|---|---|---|
| Note: "-" means unmeasured. | | | | | | |

Table 2 summarizes the sheet resistance and transparency of the films at specific film thicknesses. As can be seen from Table 2, the introduction of the auxiliary solvent shown in Table 1 effectively reduces the sheet resistance and increases the transparency. Further, the films obtained with the addition of phosphoramidite were also further able to achieve higher transparency even at thicker thicknesses.

Fig. 2 shows the film morphology on a microscope image with a size of 150 x 100 µm. The figure shows that films prepared from pure ethanol without the addition of auxiliary solvent (shown with ET logo) show crystal formation of the oxidizing agent as well as a nonuniform film morphology. However, with the addition of the auxiliary solvent shown in Table 1, the films became uniform and highly ordered. Here, the auxiliary solvent regulates the appropriate viscosity, polarity and solubility to form a better film by electrostatic interactions with the oxidizing agent and the PEG-PPG-PEG polymer. In this solvent mixture, the PEG-PPG-PEG polymer directs the growth of the polymer chain in the systematic order used in gas phase polymerization techniques.

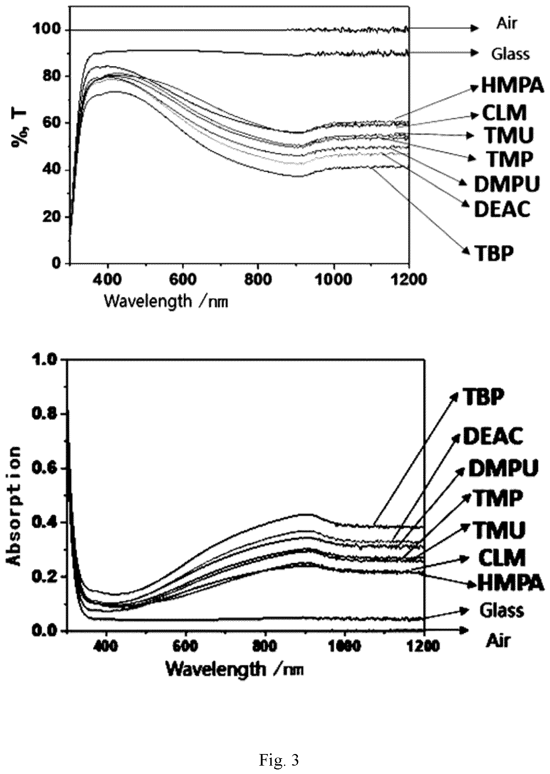

Fig. 3 shows the transmittance and absorption in ultraviolet-visible-near infrared between the films. Higher transparency indicates higher doping of counterions (which are perchlorate anions) in the PEDOT polymer chains in the films, which is due to the efficient control of the reaction rate. The figure shows that the sheet resistance of the conductive polymer film prepared by the present disclosure is in the range of 58-200 ohm/sq, and the transparency in the visible range is in the range of 70-85%, which is sufficient to meet the commercial requirements.

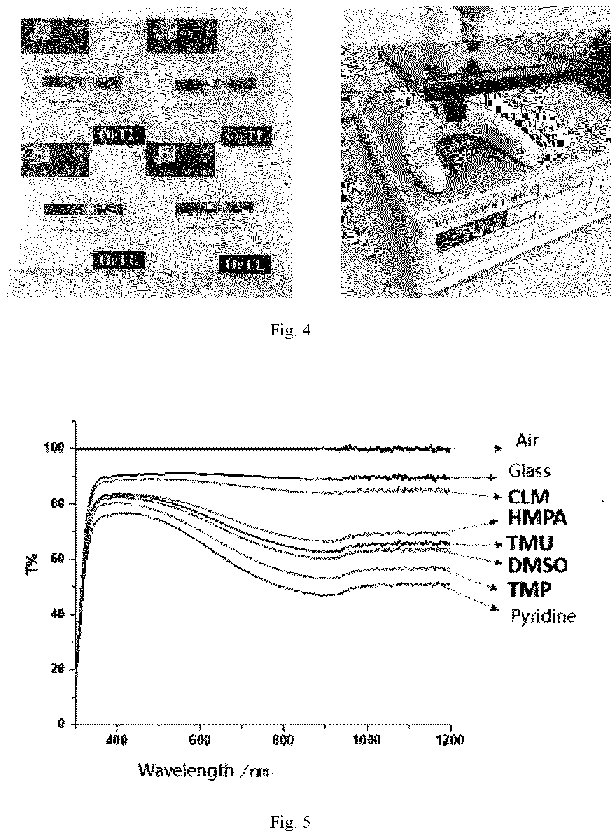

In addition, the present disclosure confirms the commercial viability of the method by performing scale-up experiments on a 10 x 10 cm² glass substrate by the solution method. Fig. 4 shows a digital photograph of a large area of the thin film and the sheet resistance on four probe devices. The different thicknesses of the films coated on substrates A, B and C show an effective control of film uniformity and transmittance. The pure glass substrate (bottom right in the image) is shown as a reference along with the picture. The left side of Fig. 4 shows the sheet resistance of film A, which is close to 72.5 Ohm/sq. This zoomed-in property demonstrates the excellent uniform film formation of the method and confirms the scalability and low-cost prospects of the technique.

### Example 1-15

In order to further verify the superiority of the technology of the present invention, the present invention gives the control results of Examples 1-15 with respect to the Comparative Example 1 in the prior art, as shown in Table 3. The results show that the present disclosure is already capable of obtaining high sheet resistance without post-treatment steps that improve conductivity and transparency (acid treatment or high temperature treatment above 100°C), whereas the prior art still requires post-treatment steps that improve conductivity and transparency (sulfuric acid immersion for 30 minutes followed by heat treatment at 120°C for 20 minutes).

### Comparative Example 1

In order to compare our one-step method with the prior art of solvent engineering, we compared the method with the one mentioned in the article (Chem. Mater. 2016, 28, 3462-3468 (DOI: 10.1021/acs.chemmater.6b01035)). In our one-step method, Fe (OTf)₃ was dissolved at 0.126 mg/mL in a solution containing 72.25 wt% ethanol, 20.00 wt% P123 and 7.75 wt% NMP. The film was prepared by adding EDOT to this solution and washed with ethanol. The film parameters obtained are shown in Table 3. Whereas the method mentioned in the above article includes additional sulfuric acid treatment of the film to increase the sheet resistance. For example, the PEDOT: OTf films were immersed in a sulfuric acid solution for 30 minutes and then dried on a hot plate at 120°C for 30 minutes. We used a similar solvent NMP and followed our one-step method (as explained at the beginning) where the oxidizing agent was Fe(ClO₄)₃. The obtained films and parameters are compared in Table 3. As we can see, our method is suitable for a one-step procedure to achieve low sheet resistance of PEDOT films. This acid post-treatment increases the manufacturing cost and hinders the industrialization.

**Table 3. Comparison of the properties of the films prepared in the one-step method of Examples 1-15 with the films prepared in Comparative Example 1**

| | Main Solven t | Auxiliar y Solvent | Oxidizin g Agent | Thicknesse s (nm) | Sheet Resistanc e (Ohm/sq) | Experimen t |
|---|---|---|---|---|---|---|
| Comparativ e Example 1 | Ethano l | NMP | Fe(OTf)₃ | 25 (±7) | 180(±8) | Duplicatio n of literature reports* |
| Example 1-15 | Ethano l | NMP | Fe(ClO₄) ₃ | 112(±6) | 74(±3) | Reference to Example 1-1 |

| | | | | | | |
|---|---|---|---|---|---|---|
| *** Chem. Mater. 2016, 28, 3462-3468(DOI: 10.1021/acs.chemmater.6b01035*)* | | | | | | |

### [Example 2]

### Example 2-1

Preparation of Solution A: 40 wt% butanol solution of oxidizing agent Fe(OTs)₃.
Preparation of Solution B: 20 wt% of P 123 polymer was added to Solution A.
Preparation of Solution C: Add 100 µL of butanol and 10 µL of the auxiliary solvent CLM to 400 µL of Solution B and mix thoroughly.
Preparation of Solution D: Add 20 µL of EDOT to 2 mL of Solution C.

The film was spin-coated with Solution D on a 15 mm² glass within 5 min, followed by annealing at 70°C for 10 min. Afterwards, it was washed in ethanol for 10 min (three times) at room temperature. It was then dried at 60°C for 30 min to produce the conductive polymer film. The experimental results are shown in Fig. 5 and Table 4.

In Examples 2-2 to 2-5, we used different auxiliary solvents, and other test conditions were maintained consistent with Example 2-1 for further experiments.

### Comparative Example 2

For Comparative Example 2, using US9484516 B2 as a reference, 0.4 g of p-toluene sulfonic acid was added to 0.6 g of butanol and fully dissolved therein. Subsequently, 13.85ul of pyridine and 0.2g of poly(ethylene glycol)-poly(propylene glycol)-poly(ethylene glycol) triblock copolymer with a weight average molecular weight of 5800 g/mol were added to the solution and the mixture was mixed thoroughly to obtain an oxidizing solution. 33.1 uL of 3,4-ethylenedioxythiophene as a monomer for forming a polymer film was added and the mixture was homogeneously mixed [Ref: US Patent, 2016, US9484516 B2]

| | Auxiliary Solvent | Thicknesses (nm) | Sheet Resistance (Ohm/sq) | %T at (400 nm) | %T at (650 nm) | Uniformity |
|---|---|---|---|---|---|---|
| Example 2-1 | CLM | <20 | 11732 (±1141) | 88.77 | 87.55 | uniform |
| Example 2-2 | TMU | 134.2 (±15) | 774 (±12) | 83.91 | 73.39 | uniform |
| Example 2-3 | HMPA | 100.56 (±9) | 5758 (±263) | 83.10 | 75.82 | uniform |
| Example 2-4 | TMP | 133.23(±14) | 1969 (±62) | 80.27 | 66.11 | uniform |
| Example 2-5 | DMSO | 101.56 | 2914 | 82.70 | 71.37 | uniform |
| | | (±13) | (±59) | | | |
| Comparative Example 2 | Pyridine (control)* | 149.13 (±7) | 1245 (±15) | 76.63 | 61.25 | uniform |

| | | | | | | |
|---|---|---|---|---|---|---|
| **U.S. Patent, 2016,* US9484516B2 | | | | | | |

### [Example 3]

### Example 3-1

The solution was prepared as follows:
Preparation of Solution A: 72 wt% of the main solvent ethanol and 8 wt% of the auxiliary solvent CLM were mixed well and 20 wt% of the block copolymer P123 was added.
Preparation of Solution B: 200 mg of oxidizing agent Fe(OTf)₃ was added to 2 mL of Solution A;
Preparation of Solution C: 20 µL of EDOT to 2 mL was added to 2 mL of Solution B.

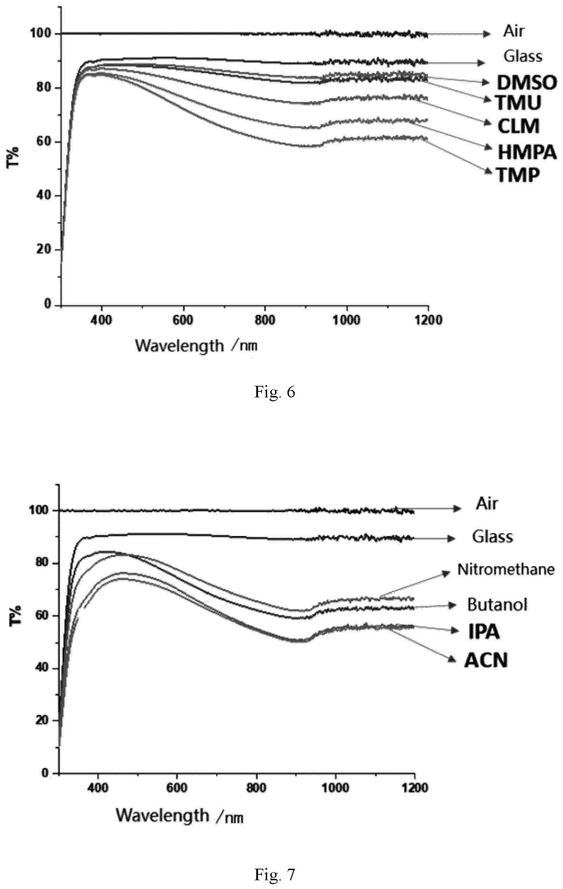

The film was spin-coated on 15 mm² of glass with Solution C within 5 min and then annealed at 60°C for 10 min. After that, it was washed in an ethanol bath for 10 min (three times) at room temperature. Then it was dried at 60°C for 30 min to produce the conductive polymer film. The results are shown in Table 5 and FIG. 6.

For Examples 3-2 to 3-6, we substituted different auxiliary solvents (as shown in Table 5), and the other conditions remained the same as those in Example 3-1.

**Table 5**

| | Auxiliary Solvent | Thicknesses (nm) | Sheet Resistance (Ohm/sq) | %T at (400 nm) | %T at (650 nm) | Uniformity |
|---|---|---|---|---|---|---|
| Example 3-1 | CLM | <20 | 337.6 (±11) | 87.24 | 80.77 | uniform |
| Example 3-2 | TMU | <20 | 2348 (±393) | 88.04 | 86.03 | uniform |
| Example | HMPA | 39.13 | 221.6 | 85.62 | 73.89 | uniform |
| 3-3 | | ( ±4) | (±15) | | | |
| Example 3-4 | TMP | 51.1 (±2) | 168.8 (±5) | 84.81 | 68.63 | uniform |
| Example 3-5 | DMSO | <20 | 706.2 (±80) | 88.86 | 87.24 | uniform |
| Example 3-6 | CLM | <20 | 337.6 (±11) | 87.24 | 80.77 | uniform |

The film properties (one step) in ethanol-polymer solvent mixture with Fe(OTf)₃ oxidizing agent under the use of auxiliary solvent at different rotational speeds are given in Table 5 and Fig. 6. As seen in Table 5, the method can be carried out in an alcohol-based main solvent which is compatible with the Fe(OTf)₃ oxidizing agent.

### [Example 4]

### Example 4-1

Preparation of Solution A: 72 wt% main solvent isopropanol and 8 wt% auxiliary solvent TMU were mixed thoroughly and 20 wt% block copolymer P123 was added.
Preparation of Solution B: 200 mg of oxidizing agent Fe(ClO₄)₃ was added to 2 mL of Solution A.
Preparation of Solution C: 20 µL of EDOT was added to 2 mL of Solution B.

The film was spin-coated on 15 mm² of glass with Solution C within 5 min and then annealed at 60°C for 10 min. After that, it was washed in an ethanol bath for 10 min (three times) at room temperature. Then it was dried at 60°C for 30 min to produce the conductive polymer film. The results are shown in Table 6 and Fig. 7.

For Examples 4-2 to 4-4, we substituted different main solvents, and the other conditions were maintained as in Example 4-1 (see Table 6).

The experimental results are shown in Table 6 and Fig. 7. This set of Examples verifies the scalability and industrial utility of the one-step preparation method of the present disclosure by giving alcohol solvents with different carbon chains and other types of solvents as the main solvent.

**Table 6**

| | Main Solvent | Thicknesses (nm) | Sheet Resistance (Ohm/sq) | %T at (400 nm) | %T at (650nm) | Uniformity |
|---|---|---|---|---|---|---|
| Example 4-1 | IPA | 105.93 (±3.51) | 134.4 (±4.32) | 75.91 (450 nm) | 66.20 | uniform |
| Example 4-2 | 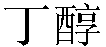 | 65.86 (±3.37) | 136.2 (±2.72) | 84.41 (400 nm) | 70.65 | uniform |
| Example 4-3 | ACN | <20 | 202.26 (±7.04) | 73.89 (470 nm) | 64.58 | uniform |
| Example 4-4 | NME | <20 | 273.4 (±7.44) | 83.20 (470 nm) | 73.89 | uniform |

### [Example 5]

### Example 5-1

Preparation of Solution A: 20 g of block copolymer P123 was added to 74 g of main solvent ethanol.
Preparation of Solution B: 6 g of auxiliary solvent CLM was added to 94 g of Solution A.
Preparation of Solution C: 160 mg of the oxidizing agent Fe(ClO₄)₃ was added to 2 g of Solution B.
Prepare Solution D: 10 µL of EDOT was added to 1 mL of Solution C.

A film was spin-coated on 15 mm² of glass with Solution D within 5 min. Then, the thiophene monomers were polymerized under the following conditions: annealing at 70°C for 10 min. After that, it was washed in an ethanol bath for 5 min (three times) at room temperature. It was then dried at 60°C for 30 min to produce a conductive polymer film. The results are shown in Table 7.

For Examples 5-2 to 5-15, we substituted different auxiliary solvents to formulate solution B or we changed the annealing process to placement in dry nitrogen (99% purity) and the rest of the conditions remained the same as in 5-1 (see Table 7).

**Table 7**

| | Preparation of Solution B | Conditions for Polymerization of Thiophene Monomers | Thicknesses (nm) | Sheet Resistance (Ohm/sq) | %T (Average of Visible Light Range) |
|---|---|---|---|---|---|
| Example 5-1 | Add 6 g of auxiliary solvent CLM to 94 g of Solution A | Anneal at 70°C for 10 min | 76 | 47.5 | 73.82 |
| Example 5-2 | | 10 min in vacuum | 35 | 129 | 84.49 |
| Example 5-3 | | 10 min in nitrogen | 78 | 55.5 | 71.72 |
| Example 5-4 | Add 6 g of CLM and 18g of water to 94 g of Solution A | Anneal at 70°C for 10 min | 53 | 66 | 77.6 |
| Example 5-5 | | 10 min in vacuum | 25 | 200 | 86.3 |
| Example 5-6 | | 10 min in nitrogen | 66 | 69 | 76.75 |
| Example 5-7 | Add 6 g of CLM and 18 g of solution containing hydrogen ions (hydrochloric acid concentration 7%) to 94 g of Solution A | Anneal at 70°C for 10 min | 44 | 97 | 78.81 |
| Example 5-8 | | 10 min in vacuum | <20 | 634 | 87.63 |
| Example 5-9 | | 10 min in nitrogen | 58 | 98 | 75.14 |
| Example 5-10 | Add 18 g of water to 94 g of Solution A | 10 min in nitrogen | 73 | 117 | 67.48 |
| Example 5-11 | | Anneal at 70°C for 10 min | 53 | 225 | 79.26 |
| Example 5-12 | | 10 min in vacuum | 64 | 391 | 79.53 |
| Example 5-13 | Add 18 g of solution | Anneal at 70°C for 10 min | 84 | 156 | 68 |
| Example 5-14 | containing hydrogen ions (hydrochloric acid concentration 7%) to 94 g of Solution A | 10 min in vacuum | 92 | 116 | 76.5 |
| Example 5-15 | | 10 min in nitrogen | 121 | 162 | 62.93 |

The preparation method according to the present disclosure is economical, effective and simple, and the fabrication of high-quality transparent conductive polymer films by a one-step solution method has promising applications.

Although some exemplary embodiments of the present disclosure have been illustrated and described, however, the present disclosure is not limited to the disclosed embodiments. On the contrary, one of ordinary skill in the art will recognize that a number of modifications and changes may be made to the described embodiments without departing from the spirit and scope of the present application in the appended claims.

## Claims

1. A preparation method for a transparent conductive polymer film, wherein the method comprises the following steps:
(a) providing a precursor solution, wherein the precursor solution comprises a main solvent, an auxiliary solvent, an oxidizing agent and a thiophene monomer, wherein the auxiliary solvent comprises one or more of water, an aqueous solution containing hydrogen ions, a cyclic amide, a cyclic urea, a chain alkyl urea, phosphate or phosphoramide, and
(b) coating the surface of a substrate with the precursor solution, so that the thiophene monomer is subjected to a polymerization reaction to form a conductive polymer film.

2. The preparation method according to claim 1, wherein:
the thiophene monomer comprises 3,4-ethylenedioxythiophene.

3. The preparation method according to claim 1 or claim 2, wherein:
the method does not require any additional post-processing step, the post-processing step comprising an acid treatment and/or a high temperature treatment of greater than 100°C;
and/or the preparation method further comprises washing and drying the conductive polymer film obtained in step (b).

4. The preparation method according to any of claims 1 to 3, wherein:
the precursor solution further comprises a polyethylene glycol copolymer, preferably the polyethylene glycol copolymer comprises a triblock copolymer of polyethylene glycol-polypropylene glycol-polyethylene glycol.

5. The preparation method according to any of claims 1 to 4, wherein:
the oxidizing agent comprises Fe(ClO₄)₃, Fe(OTf)₃ or Fe(OTs)₃, preferably the oxidizing agent comprises Fe(ClO₄)₃.

6. The preparation method according to any of claims 1 to 5, wherein:
the main solvent comprises one or more of C1-C6 alcohols, acetonitrile or dimethyl nylon acid (NME).

7. The preparation method according to any of claims 1 to 6, wherein:
the auxiliary solvent comprises one or more of a compound of formula (A), a compound of formula (B), a compound of formula (C), a compound of formula (D), a compound of formula (E), a compound of formula (F), water, an aqueous solution containing hydrogen ions, 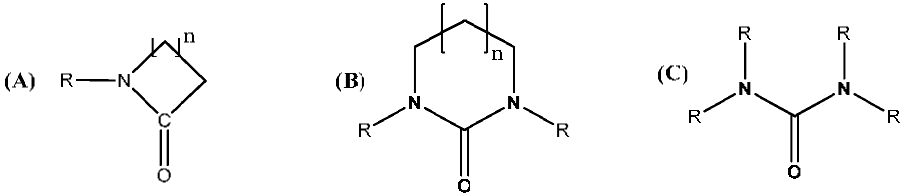 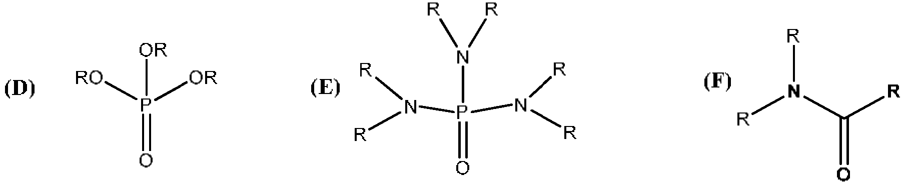
in formula (A), n is an integer from 1 to 8, and R is independently selected from C1-C8 alkyl, preferably C1-C6 alkyl, such as methyl, ethyl, propyl, butyl, pentyl or hexyl;
in formula (B), n is an integer from 0 to 8, and R is independently selected from C1-C8 alkyl, preferably C1-C6 alkyl, such as methyl, ethyl, propyl, butyl, pentyl or hexyl;
in formula (C), R is independently selected from C1-C8 alkyl, preferably C1-C6 alkyl, such as methyl, ethyl, propyl, butyl, pentyl or hexyl;
in formula (D), R is independently selected from C1-C8 alkyl, preferably C1-C6 alkyl, such as methyl, ethyl, propyl, butyl, pentyl or hexyl;
in formula (E), R is independently selected from C1-C8 alkyl, preferably C1-C6 alkyl, such as methyl, ethyl, propyl, butyl, pentyl or hexyl;
in formula (F), R is independently selected from C1-C8 alkyl, preferably C1-C6 alkyl, such as methyl, ethyl, propyl, butyl, pentyl or hexyl.

8. The preparation method according to any of claims 1 to 7, wherein:
the auxiliary solvent comprises at least one of tetramethylurea (TMU), trimethyl phosphate (TMP), tributyl phosphate (TBP), N, N-dimethyl propenylurea (DMPU), N-methylcaprolactam (CLM), hexamethylphosphorotriamine (HMPA), or N, N-diethylacetamide (DEAC).

9. The preparation method according to any of claims 1 to 8, wherein:
the aqueous solution containing hydrogen ions is selected from organic acid solution and/or inorganic acid solution.

10. The preparation method according to claim 9, wherein:
the aqueous solution containing hydrogen ions is selected from at least one of hydrochloric acid solution, phosphoric acid solution, sulfuric acid solution, perchloric acid solution or acetic acid solution.

11. The preparation method according to any of claims 1 to 10, wherein:
the content of the aqueous solution containing hydrogen ions in the auxiliary solvent is 0.1%-20% by mass, preferably 1%-10%.

12. The preparation method according to any of claims 1 to 11, wherein:
in the precursor solution, the content of the auxiliary solvent does not exceed 50% by mass, preferably 5-50%.

13. A conductive polymer film, obtained by the preparation method according to any of claims 1 to 12, wherein, preferably a sheet resistance of the conductive polymer film is not greater than 200 ohm/sq and a transmittance is not less than 70%.

14. The conductive polymer film according to claim 13 is applied in a membrane touch screen, an electronic writing pad, an electrochromic display, a smart window, a solar cell, a light emitting diode, a laser device, a gas sensor, an antistatic coating or a capacitive electrode.
